Europäisches Patentamt

European Patent Office

Office européen des brevets

(11) Publication number: **0 463 751 A1**

# EUROPEAN PATENT APPLICATION

(21) Application number: **91305065.4**

(22) Date of filing: **05.06.91**

(51) Int. Cl.⁵: **F16B 39/02**

(30) Priority: **25.06.90 US 542500**

(43) Date of publication of application:
**02.01.92 Bulletin 92/01**

(84) Designated Contracting States:
**FR GB**

(71) Applicant: **THE BABCOCK & WILCOX COMPANY**
**1010 Common Street, P.O. Box 60035**
**New Orleans, Louisiana 70160(US)**

(72) Inventor: **Brown, Steve Kelly**
**103 Westfield Drive**
**Lynchburg VA 24502(US)**
Inventor: **Sharrow, Joseph Frank**
**R.R. 5 - Rural Box 1165**
**King George VA 22485(US)**
Inventor: **Dixon, Larry Deon**
**113 Trading Block Lane**
**Forest VA 24551(US)**

(74) Representative: **Purvis, William Michael Cameron et al**
**D. Young & Co. 10 Staple Inn**
**London WC1V 7RD(GB)**

(54) **Locking bolt assembly.**

(57) A locking bolt assembly (10) which prevents the release of loose parts in the event of bolt failure has a bolt (12) having a head (20) and a threaded main body (18) with a central bore (24) through the head (20) and the main body portion (18). The central bore (24) has a necked down portion (28) adjacent the end of the main body (18) remote from the head (20). A plurality of slots (30) along the end of the main body portion in communication with the central bore (24) form bolt fingers around the necked down portion (28). A plunger (14) is slidably received in the central bore (24) and exerts radial pressure at the necked down portion (28) to expand the bolt fingers outwardly and lock the bolt in its installed position without changing the preload of the installed bolt. The plunger (14) is retained in its bolt locking position and prevents the release of loose parts in the event of bolt failure.

FIG. 2

The invention relates to a locking bolt assembly.

Such an assembly can lock a belt in position and prevent the release of loose parts in the event the bolt breaks.

In a variety of situations, especially in nuclear power plants, many bolts are locked in position to prevent loosening and to capture the bolt head to prevent loose parts from entering the system if a bolt should fail. Methods used to capture and lock bolts are to incorporate welded locking cups or bolt heads, staked lock nuts, upset threads, or lock nuts. Methods requiring welding are not acceptable when performing field work on radioactive parts because most of this work must be performed underwater and underwater welding for such an application is unavailable. Previously proposed devices directed toward locking fasteners of which the applicants are aware are described in the following:

Patent Specification US-A-4 411 570 which discloses a tamper-proof fastener where a pin is driven into a bore in the fastener to deflect a fastener leg outwardly and lock it in its installed position. The pin is headless and fits flush with the head of the fastener to prevent tampering.

Patent Specification US-A-3 042 094 which discloses an expander received inside a bolt to cause locking of the threads with the nut.

Patent Specification US-A-2 438 533 which discloses the use of a pin to spread two arms of a stud apart to lock the stud in place.

Patent Specification US-A-1 409 817 which discloses the use of a locking key that causes a slotted end of the bolt to expand and lock with a nut. Separated portions of the key are bendable to prevent separation of the key and bolt while the key head is received in a recess in the bolt head.

Patent Specifications US-A-2 871 749; US-A-2 463 859; US-A-322 657 and FR-A-867 253 which all disclose locking members that are threaded into the bore through the centre of the bolt.

Patent Specifications US-A-2 314 445 and US-A-2 181 103 which disclose smooth unthreaded rivets secured with centre-bore drive pins.

Patent Specifications US-A-1 372 291; US-A-1 033 120 and US-A-990 065 which disclose designs where the locking force is applied from the end of the bolt toward the head.

Patent Specification US-A-2 370 327 which discloses the use of a tubular insert for permanent anchorage in environments where vibrations and ordinary operating stresses may cause loosening.

According to one aspect of the invention there is provided a locking bolt assembly, comprising:

a. a threaded bolt having a central bore therethrough;

b. a necked down portion in the central bore adjacent one end of the bolt;

c. a plunger slidably received in the central bore and movable between a first bolt installation/removal position and a second bolt locking position; and

d. means to retain the plunger in its second bolt locking position.

According to another aspect of the invention there is provided a locking bolt assembly, comprising:

a. a bolt having a head, a threaded main body portion, and a central bore through the head and main body portion;

b. a necked down portion in the central bore adjacent the end of the main body portion remote from the head;

c. a plurality of slots extending longitudinally of the main body portion, forming bolt fingers around the necked down portion;

d. a plunger slidably received in the central bore and movable between a first bolt installation/removal position and a second bolt locking position; and

e. means to retain the plunger in its second bolt locking position.

Such a locking bolt that can advantageously be installed and removed by access to only one side of the bolt, can prohibit the release of loose parts if the head of the bolt should separate from the main body portion, and need not add preload to the bolt which could result in increased bolt failures. The central bore accepts the plunger and has a concentric counterbore in the head to accept the head of the plunger. The necked down portion is provided adjacent the bottom of the bolt. The plunger is provided with a corresponding portion having a larger diameter than the necked down portion of the bore. Slots machined in the end of the bolt allow outward expansion of this threaded portion of the bolt in response to installation of the plunger. A snap ring installed in the lower end of the bore fits into a groove in the end of the plunger to retain the plunger in place even in the event of failure of the bolt head. The head of the plunger may also be staked in place in the counterbore in the bolt head.

The invention is diagrammatically illustrated by way of example in the accompanying drawings, in which:

Figure 1 is a partial sectional view of a locking bolt assembly according to the invention in an unlocked position;

Figure 2 is a sectional view of the locking bolt assembly of Figure 1 in a position; and

Figure 3 is a detailed sectional view illustrating a snap ring and locking function of a plunger of the locking bot assembly of Figures 1 and 2.

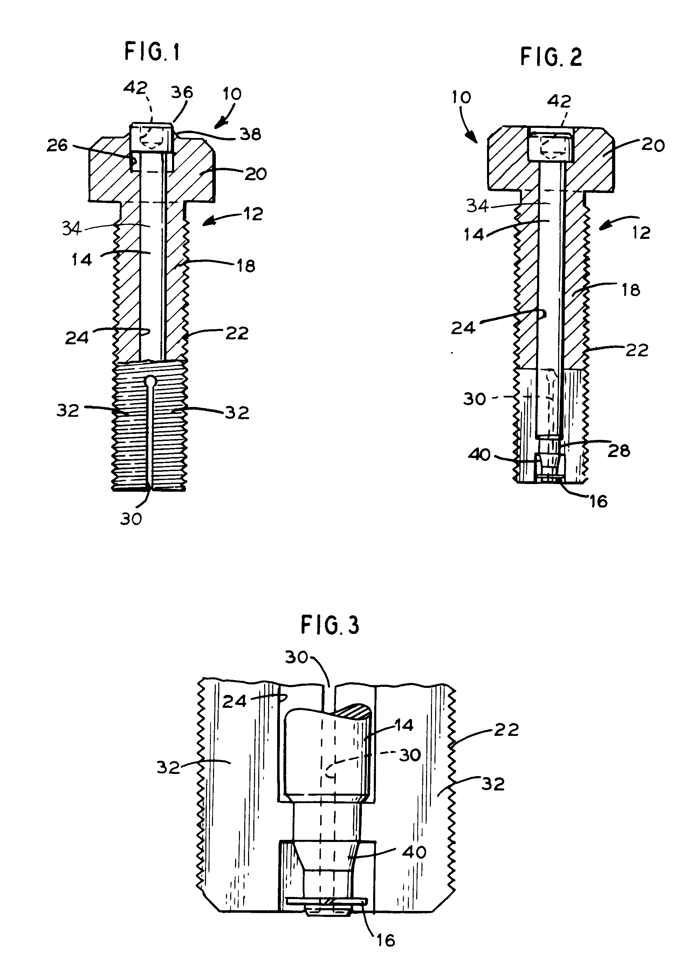

Referring to the drawings a locking bolt assembly 10 generally comprises a bolt 12, a plunger 14, and a snap ring 16. The bolt 12 has a main body portion 18 with a head 20 at one end having a greater outer dimension than the main body portion 18. The head 20 may be of any suitable shape, such as hexagonal, for the attachment of wrenches or sockets used during installation and removal. Threads 22 are provided along the length of the main body portion 18 in a size and pitch matching that of the workpiece (not shown) that the locking bolt assembly 10 is to be attached to. The bolt 12 is provided with a central bore 24 therethrough along its longitudinal axis. As can be seen in Figure 1, the central bore 24 is enlarged to form a counterbore 26 in the head 20 to receive the head of the plunger 14. The central bore 24 is provided with a necked down portion 28 adjacent the bottom of the bolt 12, as best seen in Figure 2, which is of lesser diameter than the remainder of the central bore 24. At the end opposite to the head 20 the bolt 12 is provided with at least one slot 30 that runs longitudinally from the end along a part of main body portion 18 and extends through the entire radius so as to interconnect with the central bore 24. In the preferred embodiment, four slots 30 are provided and evenly spaced about the circumference of the main body portion 18. This creates four bolt fingers 32 of which two can be seen in Figure 1.

The plunger 14 is formed from a main body portion 34 that has an enlarged head 36 at one end. The main body portion 34 is sized to be slidably received within the central bore 24 of the bolt 12. A head 36 of the plunger 14 is sized to be slidably received within the counterbore 26 of the bolt 12 such that when fully inserted the upper edge of the plunger 36 is slightly below the upper edge of the bolt head 20. The lower end of the plunger 14 is of a slightly smaller diameter than the main body portion 34 and tapers outwardly as seen in Figure 2 to the normal diameter of the main body portion 34 which is larger than the inner diameter of the necked down portion 28. A tapered position 40 allows easy insertion of the plunger 14 beyond the necked down portion 28. Upon insertion of the plunger 14 to this point, the larger diameter of the main body portion 34 above the tapered portion 40 bears against the necked down portion 28 and causes radial outward movement of the bolt fingers 32 into a tighter locking engagement with the workpiece that the bolt 10 is threaded into.

Means for retaining the plunger 14 in its second bolt locking position is provided in the form of a raised area 38 around the counterbore 26. When the plunger 14 is fully inserted in the central bore 24, as shown in Figure 2, the raised area 38 may be staked down over the edges of the plunger head 36. The snap ring 16 retains the plunger 14 in its first unlocking or bolt installation/removal position. The snap ring 16, as shown in Figure 3, is received within a circumferential groove adjacent the end of the plunger 14 below the tapered portion 40. This provides two independent retention means for the plunger 14 in preventing the release of loose parts in the event of bolt failure. Means for removal of the plunger 14 to allow unlocking and removal of the bolt 10 is provided in the form of a threaded recess 42 in the plunger head 36. A tool (not shown) can be threaded into the recess 42 and then used to remove the plunger 14 from the central bore 24. This relieves the outwardly directed pressure of the plunger main body portion 34 against the necked down portion 28 and allows the bolt fingers 32 to move radially inwardly.

In operation, the plunger 14 is inserted into the bolt 12 in its second bolt locking position, the snap ring 16 is installed on the end of the plunger 14, and the plunger 14 is then retracted to its first unlocking position. The bolt 12 is then installed by threading it into a workpiece or nut and torqued to a predetermined value. During this installation, the plunger 14 is in its first unlocking or bolt installation/removal position shown in Figure 1. To lock the bolt assembly 10 in its installed position, the plunger 14 is fully inserted into the central bore 24 in its second bolt locking position shown in Figure 2. During insertion, the tapered portion 40 allows easy movement of the main body portion 14 across the necked down portion 28. The main body portion 14, which is larger in diameter than the necked down portion 28 causes outward radial movement of the bolt fingers 32, which is allowed by the slots 30 spaced around the end of the main body portion 18 of the bolt 12. The threads 22 are thus caused to move into a tighter contact with the corresponding threads of the workpiece to prevent unwanted loosening. When using a nut that engages the bolt 12 above the slots 30 the expanded threads will actually be on an opposite side of the nut to the bolt head 20 and act in the same fashion as a rivet to prevent loosening. The snap ring 16 is received in a groove adjacent the end of the plunger 14 to retain it in its first unlocking or bolt installation/removal position and to prevent the release of loose parts in the event of bolt failure. The raised area 38 may also be staked down over the edge of the plunger head 36 to serve as a retainer. It should be noted that the expansion of the threads 22 does not change the torque preload. In the event of bolt failure, which normally occurs close to the head of the bolt along the main body portion, the plunger 14 prevents the head and main body portion from separating and becoming loose parts that could cause damage in a system such as a nuclear steam supply system. Removal of the bolt assembly 10 may be accomplished when access to only the head is available by threading an appropriate tool (not shown) into the threaded recess 42 in the plunger head 36 and retracting the plunger 14 from its second bolt locking position to its first bolt installation/removal position. This allows the bolt fingers 32 to retract radially inward and easy removal of the bolt 12 from the workpiece or nut.

**Claims**

1. A locking bolt assembly (10), comprising:
   a. a threaded bolt (12) having a central bore (24) therethrough;
   b. a necked down portion (28) in the central bore (24) adjacent one end of the bolt (12);
   c. a plunger (14) slidably received in the central bore (24) and movable between a first bolt installation/removal position and a second bolt locking position; and
   d. means (38) to retain the plunger (14) in its second bolt locking position.

2. A locking bolt assembly according to claim 1, wherein the bolt (12) is provided with a plurality of longitudinal slots (30) along one end, forming bolt fingers (32) around the necked down portion (28) of the central bore (24).

3. A locking bolt assembly according to claim 1, wherein the means to retain the plunger (14) in its second bolt locking position comprises a raised area (38) around one end of the central bore (24) capable of being staked down over the plunger (14) when in its second bolt locking position.

4. A locking bolt assembly according to claim 1, wherein the plunger (14) is provided with a threaded recess (42) at one end.

5. A locking bolt assembly according to claim 1, further comprising means (16) to retain the plunger in its first bolt installation/removal position.

6. A locking bolt assembly according to claim 5, wherein the means to retain the plunger (14) in its first bolt installation/removal position comprises:
   a. a circumferential groove around and adjacent one end of the plunger (14); and
   b. a snap ring (16) received with the circumferential groove.

7. A locking bolt assembly, comprising:
   a. a bolt (12) having a head (20), a threaded main body portion (18), and a central bore (24) through the head (20) and main body portion (18);
   b. a necked down portion (28) in the central bore (24) adjacent the end of the main body portion (18) remote from the head (20);
   c. a plurality of slots (30) extending longitudinally of the main body portion (18), forming bolt fingers (32) around the necked down portion (28);
   d. a plunger (14) slidably received in the central bore (24) and movable between a first bolt installation/removal position and a second bolt locking position; and
   e. means (38) to retain the plunger (14) in its second bolt locking position.

8. A locking bolt assembly according to claim 7, wherein the means to retain the plunger (14) in its second bolt locking position comprises a raised area (38) around one end of the central bore (18) capable of being staked down over the plunger (14) when in its second bolt locking position.

9. A locking bolt assembly according to claim 7, wherein the plunger (14) causes radial outward movement of the bolt fingers (32) when in the second bolt locking position.

10. A locking bolt assembly according to claim 7, wherein the plunger (14) is provided with a threaded recess (42) at one end.

11. A locking bolt assembly according to claim 7, further comprising means (16) to retain the plunger (14) in its first bolt installation/removal position.

12. A locking bolt assembly according to claim 11, wherein the means to retain the plunger (14) in its first bolt installation/removal position comprises:
    a. a circumferential groove around and adjacent one end of the plunger (14); and
    b. a snap ring (16) received within the circumferential groove.

## FIG.1

## FIG.2

## FIG.3

European
Patent Office

**EUROPEAN SEARCH
REPORT**

Application Number

**EP 91 30 5065**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 508 991 (FERRONNERIE CROTTI)<br>* claim 1; figures 3,4 *<br>– – – | 1,2,7,9 | F 16 B 39/02 |
| A | DE-U-1 683 017 (NIELDS PATENTS)<br>* page 3, lines 11-25; figures 1,2 *<br>– – – | 1,5,7,11 | |
| D,A | US-A-2 438 533 (C.V. BOOTH)<br>* claim 1; figure 3 *<br>– – – – – | 1,7 | |
| | | | TECHNICAL FIELDS SEARCHED (Int. Cl.5) |
| | | | F 16 B |

The present search report has been drawn up for all claims

| Place of search | Date of completion of search | Examiner |
|---|---|---|
| Berlin | 30 September 91 | WESTERMAYER W G |

CATEGORY OF CITED DOCUMENTS

X : particularly relevant if taken alone
Y : particularly relevant if combined with another
　document of the same catagory
A : technological background
O : non-written disclosure
P : intermediate document
T : theory or principle underlying the invention

E : earlier patent document, but published on, or after
　the filing date
D : document cited in the application
L : document cited for other reasons

&: member of the same patent family, corresponding
　document